# FASCICULE DE BREVET EUROPEEN

(11) **EP 3 476 192 B1**
(45) Date de publication et mention de la délivrance du brevet: **19.08.2020**
(21) Numéro de dépôt: 18197691.1
(22) Date de dépôt: 28.09.2018
(51) Int. Cl.: A01C 7/14, A01C 7/04

(54) **DISPOSITIF DE RÉGULATION DE LA DISTRIBUTION DE GRAINES POUR SEMOIR, ET SEMOIR CORRESPONDANT**
DOSIERVORRICHTUNG DER VERTEILUNG VON SAATKÖRNERN FÜR EINE SÄMASCHINE, UND ENTSPRECHENDE SÄMASCHINE
DEVICE FOR CONTROLLING SEED DISTRIBUTION FOR SEEDER, AND CORRESPONDING SEEDER

(30) Priorité: 27.10.2017 FR 1760172
(43) Date de publication de la demande: 01.05.2019
(73) Titulaire: Sulky Burel, 35220 Chateaubourg (FR)
(72) Inventeur: CLOCHARD, Daniel, 35113 Domagne (FR)
(74) Mandataire: Vidon Brevets & Stratégie

(56) Documents cités:
- EP-A1- 3 238 518
- EP-A1- 3 238 519
- DE-B- 1 051 047
- DE-C- 242 583
- DE-C- 421 000
- DE-U1- 9 300 439

## Description

### 1. Domaine de l'invention

Le domaine de l'invention est celui des semoirs en ligne, notamment pour le semis de céréales ou de légumineuses.

L'invention concerne plus précisément l'amélioration de la répartition sur le sol des graines au moment de leur distribution, et concerne notamment la régulation de la distribution, en aval d'un dispositif de distribution et de dosage d'un élément semeur. On entend ici par « graines » des semences, et plus généralement toutes particules susceptibles d'être distribuées de la même façon, par exemple des particules d'engrais ou de protection des semis (anti-limaces par exemple).

### 2. Art antérieur et ses inconvénients

Dans le cadre de l'agriculture de précision, il est souhaitable que la distribution des graines, pendant les semis, soit la plus régulière et la plus précise possible. Il est généralement souhaité que les graines soient déposées dans un sillon, à intervalles réguliers, sans manque ni doublon.

Dans ce but, il a été développé des semoirs de précision, souvent appelés semoirs monograine. Ces semoirs monograine sont prévus pour semer spécifiquement un type de graines prédéterminé (maïs, betterave,...). Ils sont utilisés pour des cultures d'inter-rang supérieur à 25 cm. Chaque rang est généralement alimenté en graines par une trémie individuelle reliée à ses propres organes de distribution, d'enterrage et de rappuyage. Ces semoirs sont efficaces, mais au prix d'une complexité relativement importante. Ils disposent de moyens spécifiques, aptes à saisir des graines Ils sont encombrants, nécessitent de nombreux réglages, un apport en énergie (notamment pneumatique, pour fournir une dépression permettant de maintenir les graines une à une) adapté, et nécessitent des graines utilisées devant être précisément calibrées. Les semoirs monograine sont en conséquence coûteux, et réservés à certaines situations particulières.

De plus, les semoirs monograine manquent de polyvalence, et présentent notamment un encombrement tel qu'ils ne permettent pas de réaliser les semis de certaines graines, par exemple du blé, pour lesquelles un écartement inter-rang inférieur à 25 cm est souhaité.

Il existe par ailleurs des semoirs « multigraine », ou « en ligne », utilisés notamment pour les céréales, telles que le blé ou l'avoine. Ils permettent également de réaliser des semis directs, les graines étant distribuées à chaque élément semeur par l'intermédiaire d'un dispositif de dosage et de transport, alimenté par une trémie contenant les graines et dirigeant les graines vers le sol via un conduit de transfert. Un tel dispositif de dosage est généralement placé sous la trémie, et est équipé d'une ou plusieurs roues munies d'alvéoles ou de dents formant des ergots, aptes à recevoir un volume déterminé de graines (les roues étant adaptées au type de graine à semer).

Ces systèmes de dosage et de transport, dont un exemple est illustré par le document DE1051047, sont prévus pour permettre que les semences soient éjectées d'une manière relativement régulière dans le conduit de transfert de façon à assurer leur répartition homogène, en ligne, dans le sol. Toutefois, on constate en pratique qu'il existe, sur une longueur de sillon, des zones où les graines sont absentes ou au contraire déposées par paquets. Cette répartition irrégulière des graines se traduit par une répartition irrégulière des plants, et donc par une perte de rendement pour l'agriculteur.

Ainsi, alors que la précision des semis avec un semoir monograine peut atteindre 90 à 95% de graines bien placées, elle reste généralement en dessous de 40% avec un semoir en ligne.

Pour améliorer la précision de ces semoirs en ligne, le déposant a proposé, pour répartir les semences de façon plus homogène, de réguler la distribution des graines en ajoutant un réservoir tampon disposé sur le chemin des graines, entre le dispositif de dosage et de transport et l'extrémité du conduit, à proximité du sol. Cette approche est notamment décrite dans le document de brevet FR2691040, qui présente ainsi un système de régulation mettant en œuvre une pluralité de diabolos disposés à la sortie du dispositif de dosage. Les diabolos saisissent les graines dès la sortie du doseur par l'intermédiaire d'une goulotte d'approvisionnement qui sert de réserve tampon, pour amortir l'effet des arrivées par paquets et des lacunes de graines. La forme en V du diabolo permet de rassembler et d'emprisonner les graines pour les aligner les unes à la suite des autres, avec une meilleure précision.

Toutefois, le dispositif de régulation est sensible aux secousses. Il doit être placé à la suite immédiate du doseur, et reste donc éloigné du sol. De ce fait, une grande partie du gain de régularité de distribution des graines se trouve ici aussi annulé durant le transport de la graine entre la sortie du régulateur et le sol. En outre, des blocages de graines peuvent apparaître dans un diabolo, réintroduisant des manques, suivis de paquets au moment de la libération.

Pour améliorer la précision de ces semoirs en ligne, notamment pour répartir les semences de façon plus homogène, le déposant a proposé de réguler la distribution des graines en associant à un réservoir tampon disposé sur le chemin des graines, une roue apte à prélever des graines dans une zone de réserve, au moyen d'au moins une rangée de dents, assurant chacune le prélèvement d'une graine dans la zone de réserve, chaque dent présentant un logement apte à recevoir une graine (approche décrite par exemple dans les documents de brevet EP3238518 et EP3238519, non publiés à la date de priorité de la présente demande).

Cette approche est efficace, par rapport à l'art antérieur. Cependant, dans certains cas, le guidage de la graine pour une délivrance au moment souhaité peut s'avérer insuffisamment précis.

Il existe donc un besoin d'une régulation plus efficace, pour les semoirs en ligne, permettant de limiter les pertes de régularité de distribution des graines, sans faire appel aux moyens complexes des semoirs monograine, et notamment à des moyens pneumatiques pour maintenir les graines.

En particulier, il est souhaitable d'améliorer la précision des semoirs classiques, pour se rapprocher de la précision des semoirs monograine, sans la complexité et l'encombrement de ces derniers.

On connaît par ailleurs des systèmes aptes aux semis en poquets (DE254520 ou EP0076219 par exemple), mettant en œuvre des roues dentées dont chaque dent est adaptée prendre systématiquement plusieurs graines (poquets), et délivre ces graines « en lot ». Ces systèmes, adaptés à certaines cultures, s'opposent à l'objectif de l'invention de délivrer des graines une à une, de façon la plus régulière possible.

### 3. Exposé de l'invention

L'invention répond à ce besoin en proposant un dispositif de régulation pour semoir, destiné à alimenter en graines un élément semeur d'un semoir et destiné à être monté en aval de moyens de dosage et de transport des graines, ledit dispositif de régulation comprenant une zone de réserve, alimentée en graines via une entrée d'alimentation connectée auxdits moyens de dosage et de transport.

Selon l'invention, le dispositif de régulation comprend une entrée reliée auxdits moyens de dosage et de transport et une sortie reliée audit élément semeur.

Selon l'invention, le dispositif de régulation comprend en outre une roue apte à prélever des graines dans ladite zone de réserve, au moyen d'au moins une rangée de dents, chaque dent étant configurée pour assurer un prélèvement d'une unique graine dans ladite zone de réserve, et présentant:
- un logement, apte à recevoir une graine ;
- une portion de guidage d'une graine, formant toboggan et présentant une gorge de guidage d'une graine, ladite gorge étant creusée dans la dent et le fond de ladite gorge se trouvant sous le niveau de la zone de sortie dudit logement de la dent suivante,
de façon qu'une graine prélevée dans ladite zone de réserve est d'abord maintenue dans le logement d'une dent, puis est progressivement guidée dans ladite gorge de la dent précédente.

La présence d'une portion de guidage, appelée également toboggan, présentant une gorge de guidage permet d'assurer un maintien et un guidage précis de chaque graine, qui se déplace progressivement dans la gorge, pour être libérée au moment souhaité, de façon à assurer une régulation simple et efficace de la distribution des graines. Les bords de la gorge empêche une chute intempestive de la graine sur un côté de la roue, et assure que cette graine est efficacement dirigée vers le bec de la dent, avant d'être libérée.

Le fond de la gorge se trouve sous le niveau de la zone de sortie du logement, c'est-à-dire que la distance entre le centre de la roue et le fond de la gorge est inférieure à la distance entre ce centre et la zone de sortie. En d'autres termes, une graine sortant d'un logement « tombe », ou « descend », dans la gorge de guidage.

Ainsi, en considérant comme référence (0°) un rayon de la roue s'étendant verticalement vers le bas, on peut distinguer les secteurs angulaires suivants (dont les plages peuvent légèrement varier, en fonction des mises en œuvre) :
- lorsque la dent se trouve dans un premier secteur angulaire compris sensiblement entre 0 et 90°, ladite pointe guide une graine présente dans la zone de réserve vers ledit logement ;
- lorsque la dent se trouve dans un secteur angulaire compris sensiblement entre 20 et 180°, ledit logement reçoit et maintient ladite graine ;
- lorsque la dent se trouve dans un secteur angulaire compris sensiblement entre 180 et 310°, ladite graine sort du logement et rejoint le toboggan de la dent précédente, le long duquel elle glisse progressivement ;
- au-delà, la graine est libérée.

La notion de « dent précédente » fait référence au sens de rotation de la roue.

Ce toboggan, de longueur L relativement importante, selon l'invention présente de nombreux avantages. La graine n'est pas maintenue fortement dans le logement (au risque d'un éventuel blocage), mais peut rejoindre rapidement le toboggan, qui forme une zone « de détente », ou « de décompression », guidant progressivement la graine, pour mieux contrôler l'instant de sa libération. La gorge présente une forme, notamment une section (par exemple en V ou en U), adaptée pour éviter toute chute de la graine lors de son transport, par exemple par basculement de la graine d'un côté ou l'autre du dos de la dent.

La graine est ainsi guidée et centrée au sein de la dent, son trajet étant précisément défini le long du toboggan.

On notera que la dent peut présenter, dans le prolongement du toboggan, une pointe formant un bec, la partie supérieure dudit bec étant recourbée vers ladite roue (par exemple en définissant sensiblement une portion d'ellipse), et la partie inférieure dudit bec correspondant à une portion supérieure dudit logement.

Ce bec correspond à la zone de sortie du toboggan et de sa gorge, ou de libération de la graine, et peut dans ce sens être assimilé à un bec verseur.

Selon un mode de réalisation de l'invention, ledit logement définit sensiblement, dans le plan de la roue, un demi-cercle de rayon Ri compris entre 1 et 10 mm, et ladite longueur L vaut au moins le triple dudit rayon Ri.

Le rayon Ri du logement est choisi de façon que le logement puisse recevoir une unique graine, c'est-à-dire qu'il est légèrement supérieur au rayon d'une sphère de référence représentant le type de graine (maïs, blé, colza,...) pour lequel la roue est prévue. Ainsi, une unique graine peut être placée dans un logement. Il est en effet important qu'une seule graine soit présente dans chaque logement, pour assurer la distribution régulière souhaitée. Les dents ne sont pas prévues pour contenir plusieurs graines : le dispositif de régulation n'est pas destiné à des semis en poquets, mais graine par graine.

Le fait que le bec présente une surface supérieure définissant une portion d'ellipse permet notamment de saisir chaque graine dans la zone de réserve sans la détériorer.

Par ailleurs, la forme sensiblement en demi-cercle du logement permet de maintenir l'unique graine prélevée dans la zone de réserve, au sein de la dent même en cas de secousses ou vibrations, sans toutefois risquer de la bloquer (ce qui pourrait arriver par exemple si la forme du logement différait de la forme de la graine, et créait des zones de frottement entre le logement et la graine). La forme du logement est ainsi adaptée à la forme des graines à semer. Ses dimensions varient en fonction du type de graines à semer (une roue donnée étant donc adaptée à un type de graine).

Selon un mode de réalisation de l'invention, ladite gorge peut comprendre une première portion de transition, adjacente au logement de la dent suivante, formant une rampe dirigée vers une deuxième portion de gorge, appelée gouttière, assurant le guidage de la graine vers la pointe de la dent.

La graine sortant du logement est ainsi guidée progressivement vers le fond de la gorge, sans à-coup et risque de rebond. La surface de la rampe peut notamment former sensiblement un triangle.

Selon un autre aspect de l'invention, ladite gouttière peut s'étendre de façon sensiblement rectiligne. En d'autres termes, le toboggan définit une trajectoire sensiblement rectiligne.

Selon un mode de réalisation particulier, la profondeur de ladite gorge représente sensiblement la moitié du rayon Ri.

Selon un autre aspect particulier, ladite gorge peut comprendre une troisième portion, dite de libération, au niveau du bec de la dent, dans laquelle les bords supérieurs de la deuxième portion se rapprochent l'un de l'autre.

Ainsi, la libération est efficacement contrôlée et centrée, via un « bec verseur ».

Selon un mode de réalisation particulier, ladite roue comprend au moins deux rangées de dents séparées par un espace central.

La présence d'au moins deux rangées de dents permet de réaliser un dispositif de régulation compact, car il permet de transporter au moins deux fois plus de graines qu'un dispositif comprenant une unique rangée. En outre, la présence d'au moins deux rangées de dents peut jouer un rôle d'agitateur de graines dans la zone de réserve : en effet, quand une rangée de dents prélève une graine dans la zone de réserve, les autres graines de la zone peuvent être naturellement poussées vers la ou les autres rangées de dents.

Dans ce cas, les dents d'une première rangée peuvent notamment être disposées en quinconce par rapport aux dents d'une deuxième rangée.

Plus généralement, quand la roue comprend plusieurs rangées de dents, ces dernières sont avantageusement décalées angulairement les unes par rapport aux autres, pour lâcher régulièrement et en alternance les graines de chacune des rangées.

Selon un autre aspect particulier, ladite au moins une rangée de dents peut être disposée à une distance d'une paroi dudit dispositif inférieure ou égale à 1 mm.

Ainsi, chaque rangée de dents est placée au plus près de la paroi du boîtier, afin de n'autoriser aucun passage de graines le long de cette paroi.

Selon un mode de réalisation particulier, chacune desdites dents présente au moins une paroi latérale, au moins sur une portion dudit logement.

Une telle paroi peut permettre de maintenir la graine à l'intérieur du logement, sans qu'elle ne puisse s'échapper latéralement, puis le cas échéant de la guider vers le toboggan.

Selon une autre caractéristique particulière, ladite roue peut être entraînée en rotation par un moteur situé au moins en partie à l'intérieur de ladite roue.

Ainsi, le dispositif de régulation forme un module consolidé apte à être fixé sur des éléments mobiles tels que des éléments semeurs du semoir. Un tel moteur peut notamment être électrique, et la vitesse du moteur peut être asservie à la dose qui arrive des moyens de distribution et de dosage, afin d'avoir un remplissage complet des dents. Cette vitesse peut être proportionnelle à la vitesse d'avancement du semoir.

Selon une mise en œuvre particulière, ladite roue est sélectionnée parmi une pluralité de roues adaptées chacune à un type, une taille et/ou une dose de graines à transporter.

Ainsi, les roues utilisées peuvent être interchangées lorsque la variété et/ou la dose de graines à semer varie.

Selon un mode de réalisation particulier, le dispositif de régulation comprend des moyens mobiles de retenue des graines à l'intérieur desdits logements desdites dents, retardant la libération de chaque graine, pouvant prendre deux positions :
- une position de retenue d'une graine, par défaut, dans laquelle lesdits moyens de retenue sont plaqués contre la dent ; et
- une position de libération d'une graine, lesdits moyens de retenue étant temporairement déplacés pour être éloignés de ladite roue.

Ces moyens mobiles peuvent permettre de maintenir les graines dans le logement jusqu'à ce que l'extrémité libre de l'élément mobile soit déplacée par une des dents. A cet instant, la graine peut s'échapper du logement et tomber de manière sensiblement verticale dans un conduit de transfert vers le sol. Ils permettent donc de retarder, et de synchroniser, les libérations de graines.

Lesdits moyens mobiles de retenue peuvent par exemple comprendre au moins un balai comprenant un assemblage de poils dont au moins la partie libre s'étend sensiblement tangentiellement à la roue et sensiblement verticalement.

Ainsi, les poils du balai maintiennent la graine contre le dos de la dent, jusqu'à ce qu'ils passent dans la position de libération, dans laquelle ils sont éloignés de la roue.

Selon un mode de réalisation particulier, ladite entrée d'alimentation de ladite réserve comprend un plan incliné, dirigeant les graines vers une marche formée sensiblement à mi-hauteur dudit dispositif de régulation, de façon à ralentir les graines arrivant dans ladite zone de réserve.

Ceci permet de recevoir les graines dans la réserve sans les projeter contre la roue à godets ni créer d'effet de rebond. Elles sont ainsi amorties dans la zone de réserve.

L'invention concerne également un semoir mettant en œuvre au moins un dispositif de régulation tel que décrit ci-dessus.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

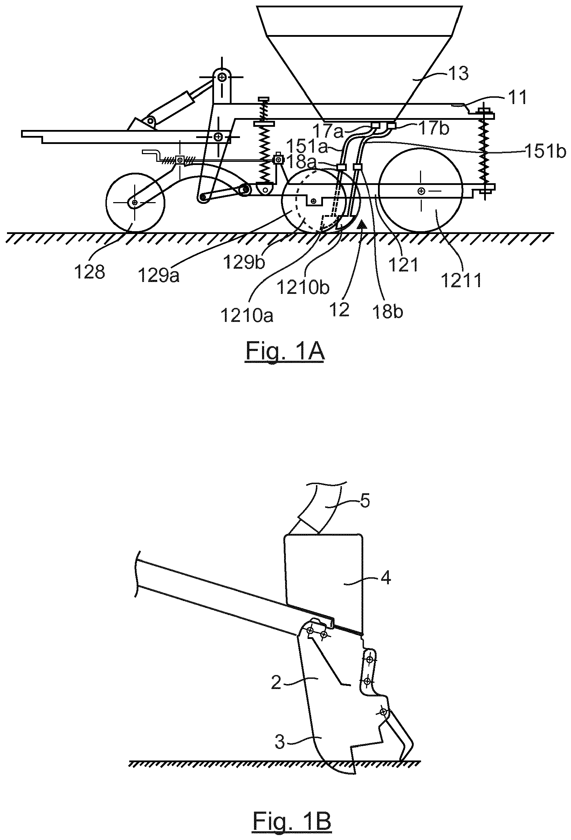

- les **figures 1A et 1B** illustrent deux exemples d'application d'un dispositif de régulation selon l'invention :
   - **figure 1A** **:** vue générale d'un élément semeur à disques d'un semoir en ligne, mettant en œuvre un dispositif de régulation selon l'invention ;
   - **figure 1B** **:** exemple de mise en œuvre sur un élément semeur à soc ;
- la **figure 2** est une vue schématique du dispositif de régulation de la distribution de graines selon un premier mode de réalisation, mettant en œuvre une roue à deux rangées de dents ;
- les **figures 3A et 3B** illustrent la roue à deux rangées de dents :

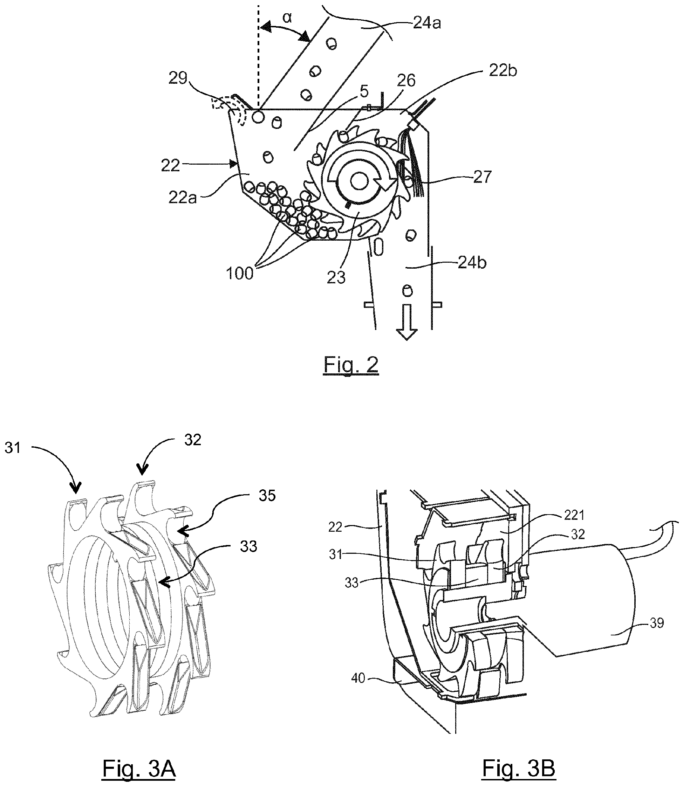

   - **figure 3A** : vue en trois dimensions de la roue ;
   - **figure 3B** **:** vue en trois dimensions de la roue mise en place dans le dispositif de régulation.

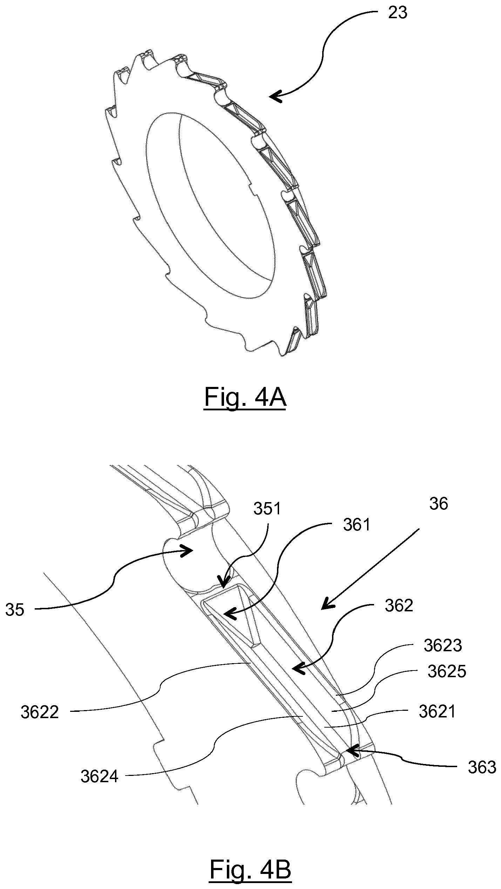

- les **figures 4A à 4F** illustrent une roue à une rangée de dents, où chaque dent comprend un logement formant godet et une gorge formant toboggan :
   - **figure 4A** **:** vue en trois dimensions de la roue ;
   - **figure 4B** **:** vue rapprochée de la dent illustrant en trois dimensions le logement formant godet et le dos de dent comprenant une gorge de guidage de la graine ;

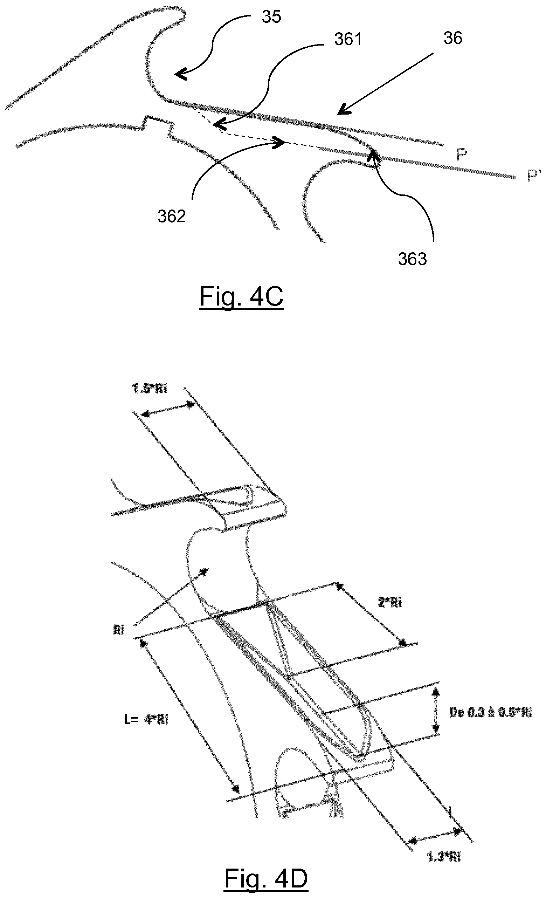

   - **figure 4C** **:** vue latérale de la dent illustrant en particulier la gorge de guidage de la graine ;
   - **figure 4D** : vue de la figure 4B, sur laquelle sont rapportées les dimensions, en proportions, du logement et de la gorge formant toboggan ;

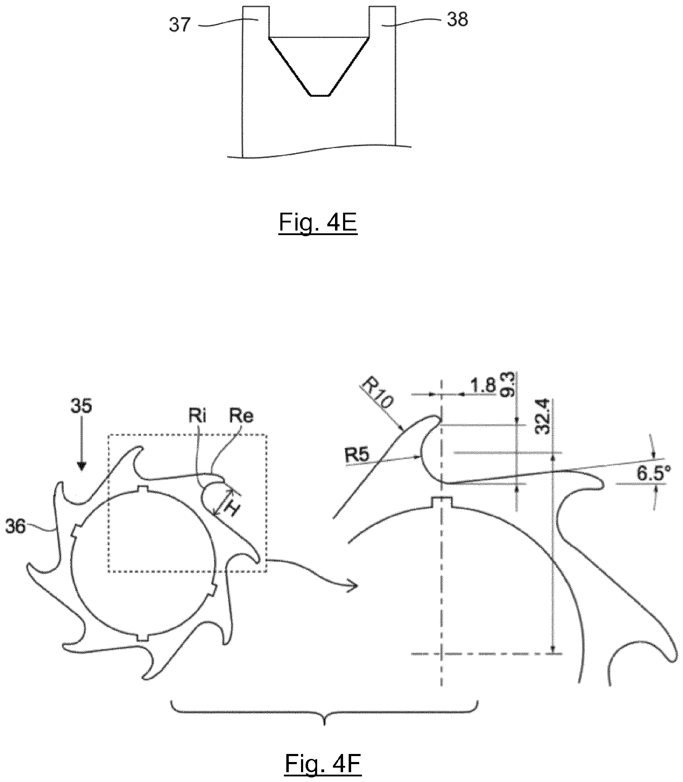

   - **figure 4E** **:** vue en coupe d'une dent munie de parois latérales de maintien de la graine ;
   - **figure 4F** : exemple de dimensions d'une dent ;

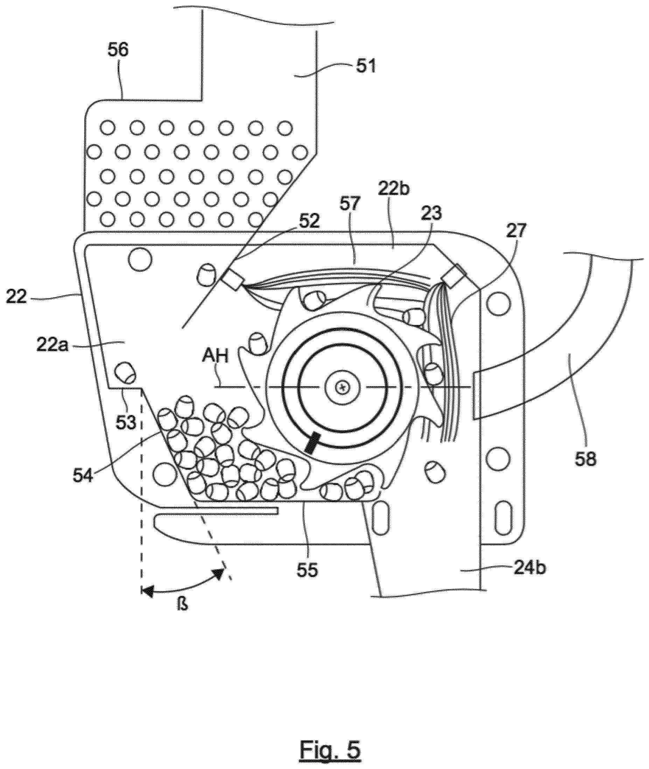

- la **figure 5** est une vue schématique du dispositif de régulation de la distribution de graines selon un deuxième mode de réalisation mettant notamment en œuvre un premier balai sensiblement horizontal et un second balai sensiblement vertical ;

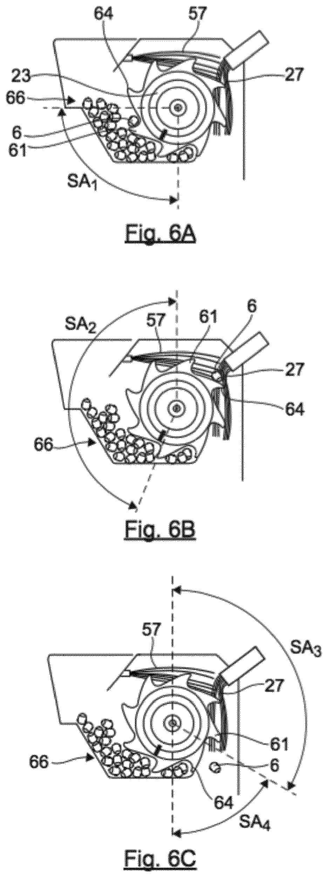

- les **figures 6A à 6C** illustrent le trajet d'une graine lors de son transport par la roue dentée, sur des vues en coupe simplifiées de la figure 5 :
   - **figure 6A** : une des graines de la réserve est prise par une dent ;
   - **figure 6B** : la graine est maintenue dans la dent, en partie supérieure, par le balai horizontal ;
   - **figure 6C** : la graine est libérée, après avoir été retenue par le balai vertical.

### 5. Description détaillée de modes de réalisation de l'invention

### 5.0 Principe général d'un semoir

Un exemple de semoir à disques mettant en œuvre l'invention est illustré sur la **figure 1A****.** Une structure de semoir de ce type est notamment décrite dans le document de brevet EP1212932 ou EP2060163.

Ce semoir est en appui sur le sol par l'intermédiaire des éléments semeurs 12. Sur la vue de côté de la **figure 1A****,** un seul élément semeur est illustré. En réalité, plusieurs éléments semeurs similaires sont mis en œuvre parallèlement.

Le semoir est équipé d'une trémie 13, fixée sur un châssis 11 et destinée à contenir les graines de semences. Dans le mode de réalisation illustré, la distribution des graines est assurée de façon mécanique. Des dispositifs de dosage 17a, 17b prélèvent les graines au fond de la trémie 13, par exemple à l'aide d'une roue doseuse rotative.

La distribution peut également être pneumatique. Dans ce cas, un générateur d'air comprimé fournit un courant d'air comprimé vers une tête de répartition et de distribution, et les graines prélevées par le dispositif de dosage sont insérées dans le flux d'air.

En-dessous du niveau du châssis 11, et solidaire de celui-ci, est donc installée une série d'éléments semeurs 12, dont un seul est illustré sur la **figure 1A****.**

Dans ce mode de réalisation, cet élément semeur comprend un bras porteur 121, relié au châssis 11 et portant :
- une roue d'appui au sol 128 ;
- une paire de disques semeurs 129a, 129b munis chacun d'un coutre, ou rasette 1210a, 1210b, apte à être alimenté en semences via un conduit souple et flexible 151a, 151b et un dispositif 18a, 18b de régulation selon l'invention, décrit plus en détail par la suite ;
- une paire de rouleaux suiveurs 1211, adaptés pour rouler sur le sol et le compacter.

L'invention peut également être mise en œuvre sur un semoir à socs, tel que décrit par exemple dans le document de brevet FR2658380. La **figure 1B** illustre un soc d'un tel semoir, classique en soi, comprenant un corps 2 à la base duquel est montée une pièce d'usure 3 profilée et arquée. La partie avant du soc est dirigée vers la gauche sur cette figure.

Selon l'invention, le soc est équipé d'un dispositif de régulation 4 (décrit plus en détail par la suite), recevant des graines depuis la trémie, de la même façon qu'expliqué précédemment, via le conduit 5. Le dispositif de régulation 4 délivre les graines de façon régulière dans le corps du soc 2, qui les dirige vers la pièce d'usure 3 qui forme un sillon.

### 5.1 Principe général de l'invention

L'invention propose une solution efficace et simple à mettre en œuvre pour permettre une distribution plus homogène des semences, en particulier pour les semences nécessitant d'être déposées une par une dans un sillon au sol, de manière alignées et à intervalles réguliers, telles que les semences de blé, colza, maïs, betterave, pois, etc.

Le principe général de l'invention repose ainsi sur la mise en œuvre d'un dispositif de régulation à entraînement mécanique (sans moyens pneumatiques, au niveau de ce dispositif de régulation, par opposition aux semoirs monograine), en supplément d'un dispositif de dosage et de transport (par la suite appelé dispositif de dosage) classiquement utilisé dans un semoir.

Ainsi, un semoir selon l'invention comprend à la fois un dispositif de dosage classique, placé en sortie de trémie, et un dispositif de régulation selon l'invention, placé en sortie du dispositif de dosage, à proximité du sol.

Ce dispositif de régulation est placé sur le parcours des graines entre le dispositif de dosage et les moyens de mise en terre des graines, ou moyens de semis.

Ainsi, le dispositif de régulation est placé « en coupure », ou « en série », par analogie au vocabulaire de l'électricité, sur le conduit de transfert (151a, 151b ou 5) qui relie habituellement directement le dispositif de dosage aux moyens de mise en terre. Ce conduit de transfert est donc décomposé en deux parties, une partie amont, reliant la sortie du dispositif de dosage à l'entrée du dispositif de régulation, et une partie aval reliant la sortie du dispositif de régulation aux moyens de mise en terre.

Il est à noter que cette « coupure » du conduit de transfert peut être effectuée non seulement sur un élément semeur neuf, mais également sur un élément semeur existant, pour améliorer la précision de celui-ci. Il suffit en effet de monter un dispositif de régulation selon l'invention sur le conduit de transfert existant.

Le dispositif de régulation reçoit donc les graines délivrées par le dispositif de dosage. Malgré les efforts mis en œuvre pour l'efficacité de tels dispositifs, il arrive que les graines soient délivrées « par paquets », et qu'il y ait des moments sans graine délivrée. Le dispositif de régulation reçoit ces graines, en conserve une réserve « tampon », et les délivre aux moyens de mise en terre de façon la plus régulière possible, une à une et à intervalles réguliers, autant que faire se peut.

Le dispositif de régulation est rapproché du sol, par rapport à la position du dispositif de dosage qui se trouve au niveau de la base de la trémie (et de préférence placé au plus près possible du sol). Il peut notamment être fixé sur l'élément semeur, en entrée de la canule ou du soc qui dirige les graines vers le sol : le gain de régularité offert par le système est ainsi conservé lorsque les graines sont déposées sur le sol. Les graines sont ainsi semées à la suite les unes des autres, de manière régulière et unitaire ou pratiquement unitaire.

Le traitement des graines est donc gravitaire, pour la prise et pour le lâcher des graines. Il est purement mécanique, et ne nécessite pas la présence de moyens pneumatiques.

Le dispositif de régulation ne doit pas être confondu avec un dispositif de dosage, qu'il complète, mais ne remplace pas. Les deux dispositifs n'ont pas les mêmes fonctions. Le dispositif de dosage est placé directement sous la trémie, et reçoit donc les graines directement de celle-ci, ce qui suppose une pression forte, due à la masse de graines présentes dans la trémie. Le dispositif de régulation est en revanche un élément de taille réduite, présentant par exemple une face latérale de l'ordre de 10 cm x 10 cm, et une largeur de 3 à 5 cm. Il présente une réserve de graines tampon, qui contient uniquement quelques dizaines ou centaines de graines (selon la taille de celles-ci), qui ne sont donc pas soumises à une forte pression.

Ainsi, alors que la précision en sortie (c'est-à-dire le respect d'une distribution de graines une à une avec un intervalle de temps, ou d'espace, souhaité au niveau du sol) du dispositif de dosage est généralement de l'ordre de 40%, celle d'un dispositif de régulation selon l'invention peut atteindre de l'ordre de 75% à 80%, voire plus dans certaines conditions. En d'autres termes, le dispositif de l'invention permet d'obtenir une précision proche de celle d'un semoir monograine, sans la complexité de ce dernier, et tout en offrant une polyvalence sur les différents types de graines.

Un tel dispositif de régulation comprend une roue munie d'au moins une rangée de dents formant godets (aptes à porter chacune une seule graine à l'intérieur du logement formé par ce godet), entraînée en rotation. Cette roue, logée dans un boîtier, puise les semences dans une réserve de graines approvisionnée par le dispositif de dosage, via une partie amont d'un conduit de transfert, et les transporte, dans ses godets, jusqu'à une partie aval d'un conduit de transfert (par exemple la canule susmentionnée).

Selon l'invention, le profil spécifique des dents de la roue est adapté pour assurer la prise d'une graine, son maintien puis sa délivrance au moment souhaité. Notamment, comme détaillé par la suite, chaque dent présente un dos de dent de longueur importante, présentant une gorge formant moyens de maintien et de guidage de la graine dans lesquels la graine se déplace progressivement pour contrôler, notamment retarder, la libération de la graine.

Le dos de la dent forme un toboggan pour la graine, et la gorge dont il est muni permet de guider, ou canaliser, la graine le long de la dent et d'éviter qu'elle ne chute, au cours de son déplacement, par exemple en basculant par l'un ou l'autre des côtés de la dent, ce qui risquerait d'entraîner des décalages de position et/ou des retards dans le dépôt des graines au sol.

Un tel phénomène de chute des graines peut par exemple avoir lieu lorsque la surface du dos de la dent est pleine, et est accentué lorsque les graines sont rondes, comme c'est en particulier le cas du colza ou du maïs.

Cette gorge permet aussi pour rôle de séparer temporellement d'éventuels doublons de graines, qui auraient été pris et conserver dans le logement. Les graines d'un doublon seront délivrées proches l'une de l'autre (trop proches, par rapport au rythme de la régulation souhaitée), mais cependant l'une après l'autre.

Ce profil de dents, le cas échéant combinée avec des moyens de retenue complémentaires, par exemple un balai, permet que la graine ne soit ainsi libérée (au plus tôt) qu'après qu'elle a dépassé une droite horizontale passant par l'axe de la roue. De cette façon, la graine n'est soumise, dans sa chute, qu'à l'effet de la gravité, et chute sensiblement verticalement autant que faire se peut. Elle n'est pas soumise à des déviations ni à la force centrifuge, en sortant tôt de la dent, ce qui risquerait d'entraîner des rebonds sur les bords de la canule, et donc également des décalages de position et/ou des retards.

### 5.2 Eléments constituant le dispositif de régulation

Les différents éléments du dispositif de régulation 1 selon un premier mode de réalisation sont illustrés sur la **figure 2****,** qui représente le système en cours de distribution de graines. Ce dispositif de régulation, de faible encombrement, peut facilement équiper un élément semeur traditionnel muni d'un dispositif de dosage classique, de manière à améliorer la précision et le rendement de l'opération de semis.

Le dispositif de régulation est formé d'un boîtier 22 comprenant deux compartiments 22a, 22b communicants. Le premier compartiment 22a forme une réserve de graines, dite « réserve tampon », où s'amassent des graines 100 en provenance du doseur (non représenté), tandis que le deuxième compartiment 22b abrite une roue 23 à godets, venant puiser les graines 100 une à une dans la réserve tampon.

Les graines 100 arrivent, dans ce premier mode de réalisation, depuis le doseur jusqu'au premier compartiment 22a du boîtier 22 via une partie aval du conduit de transfert 24a, solidarisée sur le haut du boîtier 22, et reliée à une partie amont du conduit de transfert 24b (ou reliée directement à une partie supérieure de la canule ou du soc).

La partie aval 24a est ici orientée (au voisinage du boîtier) selon une direction opposée au sens de rotation de la roue 23, par exemple selon un angle α compris entre 15° et 35° par rapport à la verticale. Ceci permet de ralentir et guider les graines, en coopération avec une paroi 25, prolongeant la partie aval tout d'abord avec l'angle a, puis verticalement. Cette paroi 25 isole la zone d'arrivée des graines de la roue 23, le compartiment 22a comprenant donc une zone d'arrivée des graines et une zone de préhension des graines.

Les graines sont ainsi dirigées vers la zone de préhension sans interférer avec le remplissage des godets de la roue 23. Il est en effet souhaitable d'éviter, ou à tout le moins de limiter, les rebonds de graines arrivant dans la réserve tampon, et en particulier que des graines viennent se loger en doublon dans une dent, ou viennent percuter et éjecter une graine présente dans une dent.

Une ouverture 29 peut être prévue, en partie supérieure du boîtier, pour permettre l'évacuation de l'air, notamment en cas d'alimentation pneumatique. Des moyens complémentaires (non représentés) formant « chaussette » peuvent permettre de diriger l'air, éventuellement chargé de poussière, vers le sol.

Selon un autre mode de réalisation, illustré par **la** **figure 5****,** la partie amont 51 du conduit amenant les graines délivrées par le dispositif doseur est sensiblement verticale. Les graines arrivent sur un plan incliné 52, formant par exemple un angle de l'ordre de 35 à 50° avec l'axe vertical défini par la partie amont 51 du conduit. Ce plan incliné 52 dirige les graines vers une marche 53, sensiblement horizontale, qui se prolonge vers le bas par un second plan incliné 54, formant également un angle β de l'ordre de 35° à 50° avec la verticale (les deux plans inclinés 52 et 54 formant entre eux un angle compris entre 80 et 100°).

La marche 53 et le second plan incliné 54 peuvent être formés dans une même pièce, et se prolonger par une partie de fond 55, s'étendant le cas échéant sous la roue 23, et définissant sensiblement la réserve tampon, dont le niveau de remplissage optimal correspond sensiblement à la position de la marche 53.

Le plan incliné 52, puis la marche 53, absorbent une partie importante de l'énergie accumulée par la graine lors de sa chute. Il y a ainsi peu d'effets de rebonds, et la saisie des graines par la roue 23 n'est pas, ou peu, perturbée.

Cette marche (et éventuellement d'autres éléments) peut être réalisée en, ou peut porter, un matériau amortisseur.

On peut noter qu'une portion 56 d'extrémité de la partie amont 51 du conduit présente une grille munie d'ouvertures permettant d'expulser l'air, notamment si le transfert des graines est assuré de façon pneumatique.

Ainsi, l'air sous pression est éjecté avant le dispositif de régulation, et ne perturbe pas le fonctionnement de ce dernier, ni la circulation des graines dans la partie aval du conduit. Ceci est en particulier important pour les graines de petite taille, notamment pour les graines de colza.

Le plan incliné 52 peut s'étendre dans le prolongement de cette portion 56.

Une arrivée 58 d'un produit complémentaire, ne nécessitant pas de régulation précise, par exemple pour un produit anti-limaces, peut être prévu (dans les différents modes de réalisation). Il est par exemple monté sur le boîtier de façon que ce produit soit délivré au-dessus de la partie amont du conduit de transfert 24b. Pour éviter que ce produit complémentaire n'interfère avec les graines lâchées, l'arrivée 58 peut être montée en face du moyeu de la roue 23, dans le cas où celle-ci porte deux rangées de dents.

Une trappe 40 de vidange **(****figure 3B****)** peut également être prévue pour vider le dispositif, et par exemple pour débarrasser le boîtier 22 des semences endommagées ou n'ayant pas été recueillies par la roue 23.

Selon une variante de mise en œuvre, cette trappe 40 (ou le cas échéant une autre trappe) peut déboucher directement ou indirectement dans la canule. Ceci permet de court-circuiter le dispositif de régulation, les graines traversant la zone de réserve et débouchant directement dans la canule (dont la partie supérieure est adaptée pour s'étendre sous la trappe), sans transiter par la roue, sans qu'il soit nécessaire de démonter ce dispositif de régulation. Ceci peut notamment être adapté à certains types de graines ne nécessitant pas, ou étant non adaptées, à une distribution via la roue du dispositif de régulation (« ray grass » par exemple) et/ou pour des forts débits ne nécessitant pas de régulation.

Par exemple, la trappe 40 peut coopérer avec un clapet mobile, s'étendant sensiblement verticalement lorsque la trappe 40 est fermée, pour former une portion supérieure de la paroi classique de la canule, et se déplaçant et s'inclinant lorsque la trappe 40 est ouverte, pour former, avec les joues prolongées de la canule, un entonnoir recevant les graines directement depuis la zone de réserve.

Ainsi, selon cette approche, il est possible de ne réguler qu'en cas de besoin.

Un exemple de roue 23, adaptée notamment aux graines de maïs, est représentée, seule, en trois dimensions sur la **figure 3A****.** Elle est également représentée mise en place dans le deuxième compartiment 22b du boîtier 22 sur la **figure 3B****.**

Cette roue 23 comprend au moins une rangée de dents formant godets. Selon un mode de réalisation particulier de l'invention, la roue 23 comprend deux rangées de dents 31, 32 formant godets positionnées de part et d'autre d'une partie centrale, ou moyeu, 33. Ce moyeu 33 présente une largeur par exemple supérieure ou égale à 1,5 fois la taille d'une graine, pour qu'une telle graine pénétrant dans l'espace défini par ce moyeu ne puisse pas s'y coincer et être entrainée et distribuée de façon surnuméraire. Cette largeur importante permet que la graine se retrouve redirigée vers la réserve, et non entrainée.

La présence de deux rangées 31, 32 de dents permet de réaliser un dispositif de régulation compact, sans que la vitesse de rotation de la roue ne soit trop élevée, le dispositif de régulation pouvant transporter deux fois plus de graines qu'un dispositif comprenant une unique rangée. En outre, la présence de deux rangées de dents 31, 32 formant godets joue le rôle d'agitateur de graines dans la zone de réserve : en effet, quand une rangée de dents prélève une graine dans la zone de réserve, les autres graines de la zone sont naturellement poussées vers l'autre rangée de dents.

Les rangées de dents 31, 32 formant godet sont décalées angulairement l'une par rapport à l'autre, autrement dit positionnées en quinconce, pour ne pas nuire à la régularité de distribution des graines. Par exemple, le décalage angulaire peut être égal à 360/nombre total de godets.

Comme représenté sur les **figures 4A à 4D****,** les dents de la roue 23 présentent chacune une cavité, ou logement 35, formant godet, ou réceptacle, leur permettant ainsi de recueillir une graine dans la réserve de graines.

Chaque logement 35 formant godet présente une forme incurvée sensiblement en demi-cylindre, ou cuvette, creusée dans la dent et qui assure que la graine reste « emprisonnée » dans le logement 35, pendant sa montée, même en cas de secousses ou vibrations (contrairement aux systèmes de type diabolo ou centrifuge existants, desquels les graines peuvent être éjectées en présence de secousses et/ou de vibrations).

Le logement 35 formant godet épouse sensiblement la forme de la graine, ce qui permet d'une part de maintenir efficacement la graine, et d'autre part de ne pas entraver le déplacement de la graine par coincement de celle-ci dans le logement 35 au moment de la libération. On note que le point le plus bas du logement 35 peut être légèrement plus bas que le bord de sortie 351 (zone de jonction entre le logement et la gorge décrite ci-après), de façon à contrôler ce moment de libération du logement.

Ce logement 35 forme sensiblement, dans le plan de la roue, un arc de cercle de rayon Ri, et plus précisément sensiblement par un demi-cercle de rayon Ri, visible sur les **figures 4D** **et** **4F****.**

Ce rayon interne Ri est généralement compris entre 1 et 10 mm, et défini en fonction du type de graines semées. Par exemple, pour une graine de colza, une dimension adaptée du rayon interne Ri est de l'ordre de 1,9mm, et de l'ordre de 5 mm pour une graine de maïs.

Dans le prolongement du logement 35 formant godet, le dos de la dent s'étend selon un plan P sensiblement tangent au bord du logement 35, comme illustré sur la **figure 4C****.**

Selon l'invention, le dos de la dent présente des moyens de maintien et de guidage, ou de canalisation, de la graine, formant un toboggan présentant une gorge, sur lequel la graine va être guidée et va se déplacer progressivement, une fois qu'elle sort du logement 35 formant godet. Cette gorge est creusée dans la dent de sorte que le fond de la gorge se trouve sous le niveau (c'est-à-dire plus proche du centre de la roue) de la zone de sortie du logement 35 de la dent suivante.

Ces moyens de maintien et de guidage prennent la forme d'une gorge 36 s'étendant par exemple sur une longueur L de 15 à 25 mm.

Il est important que la gorge 36 du toboggan présente une longueur L relativement importante, valant au moins trois fois le rayon Ri du logement 35. Dans l'exemple illustré, ce ratio L/Ri est de l'ordre de 4, L valant 20 mm.

La gorge 36 comprend, dans ce mode de réalisation, trois portions 361, 362 et 363.

Une première portion 361 présente une rampe s'étendant en pente douce depuis le logement 35 en direction de la pointe de la dent, et depuis le plan P tangent à la surface du dos de la dent, jusqu'à un plan P' décalé vers l'intérieur de la dent et sensiblement parallèle du plan P.

La largeur de cette première portion 361 rétrécit au fur et à mesure qu'elle se rapproche du plan P', de façon à former une surface sensiblement triangulaire ayant un rôle d'« entonnoir ». Cette forme particulière de la première portion 361, en pente et en « entonnoir », permet d'éviter que deux graines soient guidées en même temps dans la seconde portion 362 (dans le cas où deux graines auraient été prélevées dans la zone de réserve) et/ou d'éviter d'éventuels rebonds qui pourraient éjecter la graine.

La deuxième portion 362, sensiblement rectiligne et de section en V, apparentée à un canal ou à une gouttière, s'étend selon le plan P' depuis l'extrémité la plus étroite de la première portion 361 et jusqu'à la pointe de la dent. Elle présente un fond étroit 3621, et deux bords extérieurs 3622, 2623, des parois 3624, 3625 reliant respectivement le fond à ces bords extérieurs (voir figure 4B).

La troisième portion 363 est une portion d'extrémité, ou de libération, formée au niveau du bec de la dent. Dans cette troisième portion, les bords extérieurs 3622, 3623 se rapprochent sensiblement l'un de l'autre. Cette troisième portion se termine ainsi par un « bec verseur » formé dans le « bec ».

Un exemple de proportions de la dent est illustré sur la **figure 4D****.** Ces proportions sont exprimées en fonction du rayon interne Ri du logement 35.

La première portion 361 présente ainsi une longueur totale, rapportée sur le plan P, d'environ 2xRi. La largeur totale de la gorge 36, au niveau de la zone la plus large de la première portion 361 est d'environ 1,3xRi. Enfin, la profondeur de la gorge 36, correspondant au décalage entre les plans P et P', est d'environ 0,3 à 0,5xRi.

Plus généralement, comme illustré sur la **figure 4D** p un exemple particulier, les dimensions respectent sensiblement les ratios suivants :
- rayon intérieur du logement : Ri ;
- longueur du toboggan L ≈ 4 ^{∗} Ri ;
- largeur de la dent à l'extrémité du bec ≈ 1,5 ^{∗} Ri ;
- distance entre les bords extérieurs de la gorge ≈ 1,3 ^{∗} Ri ;
- longueur de la rampe ≈ 2 ^{∗} Ri ;
- profondeur de la gorge ≈ 0,3 à 0,5^{∗} Ri.

Par ailleurs, la pointe de la dent présente une forme de bec, recourbé - en définissant une portion d'ellipse - vers le centre de la roue 23. La surface inférieure du bec de dent est formée par la partie supérieure du logement 35 formant godet.

Cette pointe, ou bec, est adaptée notamment pour faciliter la saisie d'une graine et/ou pour retenir la graine dans le logement 35, pendant la montée de la dent depuis la zone de réserve. La surface définissant une portion d'ellipse recourbée vers la roue 23 peut être considérée comme la partie supérieure (ou externe) de la pointe, et présente un rayon externe Re.

Les dimensions (en millimètres) d'une dent, pour une roue présentée à titre d'exemple, adaptée pour le maïs, sont rapportées sur la **figure 4F****.** Ces dimensions sont bien sûr données à titre d'exemple, et peuvent varier, notamment en fonction du type de graine. Le nombre de dents est bien sur fonction du diamètre de la roue.

Selon ce mode de réalisation particulier, le rayon externe **Re** de la pointe, ou rayon externe du godet, est égal à sa hauteur **H,** tandis que son rayon interne **Ri** est équivalent à 0,6 fois sa hauteur **H.** Comme ceci apparaît sur la portion agrandie de la **figure 4F****,** le rayon interne vaut 5 mm, le rayon externe 10 mm, et la hauteur du godet vaut 9,3 mm. La longueur L du toboggan vaut ici 25 mm.

Vue en largeur (comme illustré sur la coupe de la **figure 4E****),** chaque dent peut en outre présenter, sur tout ou partie de sa longueur, au moins une paroi latérale 37, 38, présentant par exemple une hauteur comprise entre 1 et 3 mm, participant au maintien de la graine.

Dans le cas d'une grosse graine, par exemple de maïs, une seule paroi latérale peut être prévue, du côté du moyeu de la roue.

Pour des graines plus petites, par exemple du blé, des parois peuvent être mises en œuvre de chaque côté de la dent.

Les dimensions, hauteur et épaisseur des parois, peuvent être adaptées aux différents types de graines.

Par ailleurs, la roue 23 est de préférence faite d'un matériau souple peu agressif pour des graines fragiles (par exemple les graines de colza), par exemple en polyuréthane.

Des roues de formes et/ou de tailles différentes, au nombre de godets variable, ou faites d'autres matériaux, peuvent être utilisées selon le type et les dimensions des graines à distribuer. Le boîtier 22 peut à cet effet comporter un flasque apte s'ouvrir sans outil de façon à remplacer facilement les roues.

Les caractéristiques de la roue 23 et des dents, tels que décrites, comprenant notamment le logement 35 et la gorge 36, s'appliquent à une roue à deux rangées de dents telle que décrite en lien avec les figures 3A et 3B.

Comme représenté sur la **figure 3B****,** la roue 23 est positionnée dans le deuxième compartiment 22b du boîtier 22 de manière que chaque rangée de dents formant godets 31, 32 soit placée au plus près des parois 221 du boîtier (par exemple avec un espace de l'ordre de 1 mm), afin d'éviter que des graines passent et/ou se coincent le long de ces parois. De la même manière, l'espace sous la roue 23 est réduit (par exemple, pas plus de 2 mm) de manière à empêcher le passage des graines vers le conduit de transfert 24b, ainsi que les coincements de débris, bouts de paille, etc. Afin de réduire encore davantage les risques, un balai (non visible sur les figures) peut également être prévu en bas du boîtier.

Un moteur 39, par exemple de type électrique, entraîne la roue 23 en rotation. Il peut être logé intégralement ou partiellement à l'intérieur de la roue 23 formant avec le boîtier 22 un module compact pouvant être facilement monté sur des éléments semeurs.

Selon un mode de réalisation particulier de l'invention, il tourne à des vitesses relativement faibles, comprises par exemple entre 10 et 100 tours par minute. Cette vitesse peut être asservie à la dose de graines distribuées par le doseur afin que les godets soient toujours remplis. Par exemple, le niveau de semences dans la réserve tampon pourra être égal à environ 4 à 8 fois le nombre de godets.

Dans un autre mode de réalisation, plusieurs (voire tous les) dispositifs de régulation peuvent être entraînés par un seul moteur. Dans ce cas, les axes des roues des différents dispositifs sont avantageusement alignés.

Pour le maïs, la réserve contient par exemple, en moyenne, une centaine de graines. Toutefois, le dispositif de régulation, même s'il est conçu pour distribuer les graines une à une régulièrement, peut accepter des situations de doublons (graines groupées par deux ou plus) ou de manques (graine absente) le cas échéant. Il est ainsi très tolérant aux variations de charge, et ne se bloque ni en cas de surcharge ni en cas de sous-charge de la réserve. Des essais montrent qu'un tel dispositif de régulation peut accepter des surdoses fortes, de 1,5 voire 2 fois la dose prévue. Dans une telle situation, un nombre élevé de doublons sera délivré, mais le dispositif ne se bloquera pas.

Par ailleurs, l'entraînement de la roue 23 peut être lié à l'avancement du semoir, de manière proportionnelle. Ceci offre la possibilité à l'agriculteur de moduler ou couper automatiquement et instantanément la distribution si besoin (cela peut être le cas dans les extrémités de parcelles, ou dans les virages, etc.). Les graines résiduelles transportées dans le canal de transfert 24b se trouvent alors bloquées dans la réserve tampon et ne sont sélectionnées que lorsque le semoir (et donc la roue) se met à nouveau en marche.

Ceci est un avantage par rapport aux systèmes actuels, notamment les semoirs à transport pneumatique, qui disposent toujours d'une quantité de graines en transit dans les conduits, continuant à s'écouler jusqu'à vidange complète, et ce malgré l'arrêt du semoir. Dans ce cas, les graines tombent au sol où elles s'amassent.

Il peut arriver que des graines 100 soient entraînées par la roue 23 sans toutefois être placées dans une des dents formant godet. Par exemple, dans le mode de réalisation de la **figure 2****,** une graine peut se loger et être entrainée entre les deux rangées de dents 31, 32 au niveau du moyeu 33. Afin de remédier à cette éventualité, on peut prévoir un éjecteur central 26, dit « décrottoir », prenant par exemple la forme d'une lame plane, s'étendant au dessus du moyeu 33. En contact avec ou à proximité de ce moyeu, entre les deux rangées de dents 31, 32, il permet de renvoyer vers la réserve tampon les graines ne devant pas être distribuées.

Dans ce premier mode de réalisation, un balai souple 27 est placé en haut du boîtier 22, par exemple dans une zone où la roue 23 a approximativement effectué entre 1/4 et 2/3 de sa rotation après saisie d'une graine. Ce balai 27 est prévu pour maintenir et/ou guider la graine le long de la gorge 36 formant toboggan de la dent de la roue 23 jusqu'à ce qu'elle s'en échappe par gravité.

C'est-à-dire que la combinaison de la gorge 36 et d'un balai 27 (plus généralement d'un moyen de retenue mobile) permet d'optimiser le contrôle de la chute de la graine, qui est retardée au moins jusqu'à un point de rotation de la roue où la pesanteur permet à la graine de s'échapper à la verticale dans le conduit de transfert 24b (la graine ayant donc franchi l'axe horizontal passant par l'axe de rotation de la roue).

Pendant toute la phase de maintien de la graine, le balai 27 est en contact avec la roue 23, dans une position dite de « retenue » qui est sa position par défaut.

Un mécanisme adapté peut assurer l'éloignement temporaire du balai 27 dans une position dite « de libération », pour qu'il s'écarte suffisamment de la roue pour libérer la graine au moment de libération souhaité, pour synchroniser de façon optimisée les lâchers de graines. Selon une approche efficace, cet éloignement temporaire est assurée par une dent (celle qui contenait la graine ou une dent suivante, selon le sens de rotation), dont la partie supérieure (partie la plus éloignée de l'axe de rotation de la roue) vient pousser et déplacer les poils du balai. Ce sont ainsi les dents qui contrôlent le débattement des poils du balai.

Dans un deuxième mode de réalisation, représenté sur la **figure 5****,** le dispositif comprend un second balai 57 sensiblement horizontal, souple, et en contact avec le moyeu 33 et les séries de dents 31, 32 de la roue. Ce balai 57 présente l'avantage de limiter les risques de basculement des graines, tout en évitant le blocage du système, dus à de potentiels débris de graines se coinçant sous un élément plus rigide. Dans ce mode de réalisation, le décrottoir du premier mode de réalisation est supprimé.

Ces balais 27, 57 sont relativement souples, mais possèdent toutefois une raideur suffisante leur permettant de conserver la partie de leurs poils en contact avec la roue sensiblement à la verticale, ou plus précisément sensiblement radialement à la roue, pour maintenir une graine 100 en place dans la dent malgré la rotation de la roue 23, au moins jusqu'à ce que cette graine dépasse un axe horizontal AH passant par l'axe de rotation de la roue. Ainsi, la graine est libérée seulement après avoir dépassé cet axe horizontal AH, et chute verticalement, en étant soumise à l'effet de la gravité.

La souplesse des balais 27, 57 peut leur permettre de s'adapter à tous les types de roues et/ou de graines.

Ces balais 27, 57 pourraient le cas échéant être remplacés par une ou plusieurs lames souples, par exemple en matière plastique ou en caoutchouc.

Ce dispositif de régulation peut être disposé à proximité du sol, par exemple sur l'élément de semis lui-même. Ainsi, le conduit de transfert 24b des graines jusqu'au sol, présente une longueur modérée (par exemple 30 à 40 cm) permettant d'accompagner les graines sans perturber l'espacement régulier entre celles-ci. Il peut présenter une surface lisse sans aspérité ne venant pas perturber la descente gravitaire des graines.

Un dispositif de régulation selon l'invention peut être prévu pour contrôler la dose exacte de graines semées pour chaque rang. Dans certains cas, des dispositifs de régulation seront utilisés sur certains rangs seulement (par exemple 1 sur 5), ou une paire de rangs, les autres rangs étant fermés (sans semence). En effet, les semoirs classiques délivrent une rangée de graines tous les 12,5 cm, alors qu'un semoir monograine délivre une rangée de graines tous les 75 cm. L'invention permettant de s'approcher efficacement de la précision d'un semoir monograine, il peut être souhaitable d'utiliser le même écartement entre les graines.

Les graines 100 sont enfin déposées à intervalles réguliers sur le sol, la longueur modérée (de l'ordre de 30 cm par exemple) du canal de transfert 24b ne perturbant pas leur transport.

Bien sûr, les caractéristiques spécifiques ou variantes décrites en correspondance avec l'un des modes de réalisation peuvent être adaptées et/ou mises en œuvre dans un autre mode de réalisation.

### 5.3 Fonctionnement

On décrit ci-après le fonctionnement du dispositif de régulation selon l'invention, à l'aide des **figures 6A à 6C****.**

Ces figures illustrent le trajet d'une graine 6, de la préhension par la roue dans un ensemble 66 de graines présentes dans la zone tampon jusqu'à la partie supérieure du boîtier, puis jusqu'à son lâcher. Sur ces figures, pour les besoins de l'explication, une seule graine 6 est présentée, dans différentes positions successives. Bien sûr, en pratique, chaque dent porte une graine 6.

Les graines 100 présentes dans la trémie sont donc dosées et distribuées par un dispositif de dosage (non représenté). Elles arrivent de manière plus ou moins irrégulière au niveau de la zone 22a du boîtier 22 du dispositif de régulation par la partie aval du conduit 24a. Les semences 100 sont recueillies, en continu, au niveau de la réserve tampon où elles s'accumulent (66).

Une dent 61 de la roue, lorsqu'elle est dans la partie inférieure du boîtier 22, traverse l'ensemble de graines 66 et sélectionne (ou attrape) une graine 6, comme illustré sur la **figure 6A****.** Au cours de la rotation de la roue, la dent 61 traverse un premier secteur angulaire SA1, compris sensiblement entre 0° et 90° (0° correspond à un rayon de la roue s'étendant verticalement vers le bas), dans lequel la pointe de la dent 61 guide une graine 6 présente dans la réserve tampon vers le logement de réception de la graine. La forme de la pointe est adaptée pour saisir, autant que faire se peut, une unique graine, sans la détériorer (extrémité arrondie).

Dans un deuxième temps, la dent couvre un deuxième secteur angulaire SA2, compris sensiblement entre 90° et 180°, dans lequel la graine est reçue et maintenue dans le logement 35 (les secteurs SA1 et SA2 se chevauchent, certaines graines pouvant être saisies tôt (et donc maintenues dans le logement tôt), et d'autres graines plus tard, sans que le fonctionnement ne soit altéré). Ce logement définit une cavité ou un godet, adaptée à la taille de la graine, la maintenant efficacement, pour éviter qu'elle ne s'échappe, lors de la montée de la dent (malgré, par exemple, les vibrations et secousses).

Ainsi, après environ 1/4 à 2/3 de rotation de la roue 23, la graine 6, prélevée dans la réserve, arrive en contact avec les poils du balai « horizontal » 57 (dans le deuxième mode de réalisation), comme visible sur la **figure 6B****.** Pendant 1/6 à 1/4 de tour supplémentaire, elle est maintenue dans un « tunnel » (ou une cavité) formé par le rayon interne de la dent dans laquelle elle est placée, et la gorge 36 formée dans le dos de la dent 64 précédant la dent 61, et les poils du balai 57.

Puis la dent couvre un troisième secteur angulaire SA3 **(****figure 6C****),** sensiblement compris entre 180° et 310°, dans lequel la graine, soumise à la gravité, sort du logement, « descend » dans la gorge 36 formé par le dos de la dent 64 précédente, puis glisse progressivement le long de celle-ci. La graine est en particulier guidée par les poils du balai 57, s'étendant au-dessus de celle-ci et latéralement.

La graine 6 continue de glisser dans la gorge 36, venant en contact avec le deuxième balai, dit balai « vertical » 27, sans forcer, toujours sous l'effet de la gravité. La graine sort donc du logement 35 puis se déplace petit à petit le long de la gorge formant toboggan, en étant retenue (et donc sa chute retardée) par le profil spécifique de la dent, en coopération avec l'action du deuxième balai 27 formant un tunnel (ou une cavité) pour la graine. La gorge forme ainsi une « zone de détente », qui permet une sortie le plus tôt possible du logement de la dent, dont la forme est adaptée en conséquence. On évite ainsi des blocages de graines dans ce logement, en particulier lorsque plusieurs graines ont été saisies en même temps.

La graine reste ainsi maintenue sur le dos de la dent 64 précédente, jusqu'au moment souhaité pour la libération, c'est-à-dire un point de la rotation de la roue où le balai est repoussé par la dent qui avait pris la graine dans la réserve, la force de gravité permettant à la graine de s'échapper à la verticale dans le conduit de transfert aval 24b, dans le quatrième secteur angulaire SA4, sensiblement entre 310 et 360°.

Le décalage des poils peut être assuré, au moins en partie, par l'action de la dent suivante 61, dont la pointe vient en appui sur les poils, et les repousse, facilitant la chute de la graine 6. Ce mécanisme contrôle la synchronisation de la libération des graines, chaque libération étant actionnée par une dent (par la dent suivante, et plus précisément par la pointe formant la partie supérieure du logement de la graine considérée, dans le mode de réalisation illustré). Dans le cas où plusieurs rangées de dents sont prévues, les poils sont suffisamment souples et indépendants pour assurer un traitement différencié de chaque rangée (une partie des poils étant associée à une rangée donnée).

Dans ce mode de réalisation, ce sont donc les dents qui contrôlent le passage progressif de la position de retenue à la position de libération, et le retour à la position de retenue. Dans des variantes, d'autres moyens d'actionnement du déplacement sont envisageables - de préférence contrôlés par la rotation de la roue - pour assurer la synchronisation.

Il est à noter que, dans d'autres modes de réalisation, un dispositif de régulation selon l'invention peut s'affranchir de la présence de moyens de retenue. Dans ce cas, c'est la forme spécifique des dents, et en particulier le dos de dent de grande longueur, essentiellement plan, comprenant une gorge assurant une fonction de toboggan, qui assure le contrôle de la libération de chaque graine, cette libération étant retardée par le déplacement de la graine le long de ce toboggan.

## Revendications

1. Dispositif de régulation (18a, 18b, 22) pour semoir, destiné à alimenter en graines un élément semeur (12) d'un semoir et destiné à être monté en aval de moyens de dosage et de transport des graines,
ledit dispositif de régulation (18a, 18b, 22) comprenant une zone de réserve (22a), alimentée en graines (100) via une entrée d'alimentation connectée auxdits moyens de dosage et de transport,
ledit dispositif comprenant une roue (23) apte à prélever des graines (100) dans ladite zone de réserve (22a), au moyen d'au moins une rangée de dents, chaque dent étant configurée pour assurer un prélèvement d'une unique graine dans ladite zone de réserve, et présentant :
- un logement (35), apte à recevoir une graine ;
- une portion de guidage d'une graine, formant toboggan et présentant une gorge (36) de guidage d'une graine, ladite gorge étant creusée dans la dent et le fond de ladite gorge se trouvant sous le niveau de la zone de sortie dudit logement (35) de la dent suivante,
de façon qu'une graine prélevée dans ladite zone de réserve est d'abord maintenue dans le logement (35) d'une dent, puis est progressivement guidée dans ladite gorge (36) de la dent précédente.

2. Dispositif de régulation (18a, 18b, 22) pour semoir selon la revendication 1, **caractérisé en ce que** ledit logement (35) définit sensiblement, dans le plan de la roue, un demi-cercle de rayon Ri compris entre 1 et 10 mm et **en ce que** la longueur L dudit toboggan vaut au moins le triple dudit rayon Ri.

3. Dispositif de régulation (18a, 18b, 22) pour semoir selon la revendication 1, **caractérisé en ce que** ladite gorge (36) comprend une première portion (361) de transition, adjacente au logement (35) de la dent suivante, formant une rampe dirigée vers une deuxième portion (362) de gorge, appelée gouttière, assurant le guidage de la graine vers la pointe de la dent

4. Dispositif de régulation (18a, 18b, 22) pour semoir selon la revendication 3, **caractérisé en ce que** ladite gouttière (362) s'étend de façon sensiblement rectiligne.

5. Dispositif de régulation (18a, 18b, 22) pour semoir selon les revendications 1 et 2, **caractérisé en ce que** la profondeur de ladite gorge (36) représente sensiblement la moitié du rayon Ri.

6. Dispositif de régulation (18a, 18b, 22) pour semoir selon la revendication 3, **caractérisé en ce que** ladite gorge comprend une troisième portion (363), dite de libération, au niveau du bec de la dent, dans laquelle les bords supérieurs de la deuxième portion (362) se rapprochent l'un de l'autre.

7. Dispositif de régulation (18a, 18b, 22) pour semoir selon la revendication 1, **caractérisé en ce que** ladite roue (23) comprend au moins deux rangées de dents (31, 32) séparées par un espace central (33).

8. Dispositif de régulation (18a, 18b, 22) pour semoir selon la revendication 7, **caractérisé en ce que** les dents d'une première rangée (31) sont disposées en quinconce par rapport aux dents d'une deuxième rangée (32).

9. Dispositif de régulation (18a, 18b, 22) pour semoir selon l'une quelconque des revendications 1 à 8, **caractérisé en ce que** chacune desdites dents présente au moins une paroi latérale (37, 38), au moins sur une portion dudit logement (35).

10. Dispositif de régulation (18a, 18b, 22) pour semoir selon l'une quelconque des revendications 1 à 9, **caractérisé en ce que** ladite roue (23) est entraînée en rotation par un moteur (39) situé au moins en partie à l'intérieur de ladite roue (23).

11. Dispositif de régulation (18a, 18b, 22) pour semoir selon l'une quelconque des revendications 1 à 10, **caractérisé en ce que** ladite roue (23) est sélectionnée parmi une pluralité de roues adaptées chacune à un type, une taille et/ou une dose de graines à transporter.

12. Dispositif de régulation (18a, 18b, 22) pour semoir selon l'une quelconque des revendications 1 à 11, **caractérisé en ce qu'**il comprend des moyens mobiles de retenue des graines à l'intérieur desdits logements (35) desdites dents, retardant la libération de chaque graine, pouvant prendre deux positions :
- une position de retenue d'une graine, par défaut ; et
- une position de libération d'une graine, lesdits moyens de retenue étant temporairement déplacés pour être éloignés de ladite roue (23).

13. Dispositif de régulation (18a, 18b, 22) pour semoir selon la revendication 12, **caractérisé en ce que** lesdits moyens mobiles de retenue comprennent au moins un balai (27) comprenant un assemblage de poils dont au moins la partie libre s'étend sensiblement tangentiellement à la roue.

14. Semoir comprenant une pluralité d'éléments semeurs (12),
chaque élément semeur (12) comprenant des moyens de dosage et de transport, contrôlant le débit des graines à la sortie d'une trémie (13) et délivrant lesdites graines dans un conduit de transfert (5) pour alimenter des moyens de mise en terre desdites graines,
chaque élément semeur (12) comprenant également un dispositif de régulation (18a, 18b, 22) monté entre lesdits moyens de dosage et de transport et lesdits moyens de mise en terre, à proximité de ces derniers,
ledit dispositif de régulation (18a, 18b, 22) comprenant une zone de réserve (22a), alimentée en graines (100) via une entrée d'alimentation connectée auxdits moyens de dosage et de transport par une partie amont (24a) dudit conduit de transfert, ledit dispositif de régulation comprenant une entrée reliée auxdits moyens de dosage et une sortie reliée audit élément semeur,
et en ce que ledit dispositif de régulation comprend une roue (23) apte à prélever des graines dans ladite zone de réserve (22a), au moyen d'au moins une rangée de dents, chaque dent étant configurée pour assurer un prélèvement d'une unique graine dans ladite zone de réserve, et présente:
- un logement (35), apte à recevoir une graine ;
- une portion de guidage d'une graine, formant toboggan et présentant une gorge (36) de guidage d'une graine, ladite gorge étant creusée dans la dent et le fond de ladite gorge se trouvant sous le niveau de la zone de sortie dudit logement (35) de la dent suivante,
de façon qu'une graine prélevée dans ladite zone de réserve est d'abord maintenue dans le logement (35) d'une dent, puis est progressivement guidée dans ladite gorge (36) de la dent précédente.

## Patentansprüche

1. Regelvorrichtung (18a, 18b, 22) für eine Sämaschine, die dazu bestimmt ist, einem Säaggregat (12) einer Sämaschine Samenkörner zuzuführen, und dazu bestimmt ist, stromabwärts von Mitteln zur Dosierung und zum Transport der Samenkörner angebracht zu werden,
wobei die Regelvorrichtung (18a, 18b, 22) einen Vorratsbereich (22a) umfasst, dem über einen Zuführungseingang, der mit den Mitteln zur Dosierung und zum Transport verbunden ist, Samenkörner (100) zugeführt werden,
wobei die Vorrichtung ein Rad (23) umfasst, das geeignet ist, Samenkörner (100) im Vorratsbereich (22a) mittels wenigstens einer Reihe von Zähnen zu entnehmen, wobei jeder Zahn dafür ausgelegt ist, eine Entnahme eines einzigen Samenkorns aus dem Vorratsbereich sicherzustellen, und aufweist:
- einen Aufnahmeraum (35), der geeignet ist, ein Samenkorn aufzunehmen;
- einen Abschnitt zur Führung eines Samenkorns, der eine Rutsche bildet und eine Auskehlung (36) zur Führung eines Samenkorns aufweist, wobei die Auskehlung in den Zahn eingearbeitet ist und der Boden der Auskehlung sich unter der Höhe des Ausgangsbereichs des Aufnahmeraumes (35) des folgenden Zahns befindet,
derart, dass ein aus dem Vorratsbereich entnommenes Samenkorn zunächst im Aufnahmeraum (35) eines Zahns gehalten wird und anschließend nach und nach in die Auskehlung (36) des vorangehenden Zahns geführt wird.

2. Regelvorrichtung (18a, 18b, 22) für eine Sämaschine nach Anspruch 1, **dadurch gekennzeichnet, dass** der Aufnahmeraum (35) im Wesentlichen in der Ebene des Rades einen Halbkreis mit einem Radius Ri zwischen 1 und 10 mm definiert, und dadurch, dass die Länge L der Rutsche mindestens das Dreifache des Radius Ri beträgt.

3. Regelvorrichtung (18a, 18b, 22) für eine Sämaschine nach Anspruch 1, **dadurch gekennzeichnet, dass** die Auskehlung (36) einen ersten Übergangsabschnitt (361) umfasst, der dem Aufnahmeraum (35) des folgenden Zahns benachbart ist und eine Rampe bildet, die zu einem zweiten Auskehlungsabschnitt (362), Rinne genannt, gerichtet ist, der die Führung des Samenkorns zur Spitze des Zahns hin sicherstellt.

4. Regelvorrichtung (18a, 18b, 22) für eine Sämaschine nach Anspruch 3, **dadurch gekennzeichnet, dass** sich die Rinne (362) im Wesentlichen geradlinig erstreckt.

5. Regelvorrichtung (18a, 18b, 22) für eine Sämaschine nach den Ansprüchen 1 und 2, **dadurch gekennzeichnet, dass** die Tiefe der Auskehlung (36) im Wesentlichen der Hälfte des Radius Ri entspricht.

6. Regelvorrichtung (18a, 18b, 22) für eine Sämaschine nach Anspruch 3, **dadurch gekennzeichnet, dass** die Auskehlung einen dritten Abschnitt (363), Freigabeabschnitt genannt, am Horn des Zahns umfasst, in welchem sich die oberen Ränder des zweiten Abschnitts (362) einander nähern.

7. Regelvorrichtung (18a, 18b, 22) für eine Sämaschine nach Anspruch 1, **dadurch gekennzeichnet, dass** das Rad (23) wenigstens zwei Reihen von Zähnen (31, 32) umfasst, die durch einen zentralen Zwischenraum (33) getrennt sind.

8. Regelvorrichtung (18a, 18b, 22) für eine Sämaschine nach Anspruch 7, **dadurch gekennzeichnet, dass** die Zähne einer ersten Reihe (31) versetzt in Bezug auf die Zähne einer zweiten Reihe (32) angeordnet sind.

9. Regelvorrichtung (18a, 18b, 22) für eine Sämaschine nach einem der Ansprüche 1 bis 8, **dadurch gekennzeichnet, dass** jeder der Zähne wenigstens eine Seitenwand (37, 38) wenigstens auf einem Abschnitt des Aufnahmeraums (35) aufweist.

10. Regelvorrichtung (18a, 18b, 22) für eine Sämaschine nach einem der Ansprüche 1 bis 9, **dadurch gekennzeichnet, dass** das Rad (23) von einem Motor (39), der sich wenigstens teilweise im Inneren des Rades (23) befindet, drehend angetrieben wird.

11. Regelvorrichtung (18a, 18b, 22) für eine Sämaschine nach einem der Ansprüche 1 bis 10, **dadurch gekennzeichnet, dass** das Rad (23) aus mehreren Rädern ausgewählt ist, die jeweils für einen Typ, eine Größe und/oder eine Dosis von zu transportierenden Samenkörnern ausgelegt sind.

12. Regelvorrichtung (18a, 18b, 22) für eine Sämaschine nach einem der Ansprüche 1 bis 11, **dadurch gekennzeichnet, dass** sie bewegliche Mittel zum Halten der Samenkörner im Inneren der Aufnahmeräume (35) der Zähne umfasst, welche die Freigabe jedes Samenkorns verzögern und zwei Positionen einnehmen können:
- eine Position zum Halten eines Samenkorns, als Standardposition; und
- eine Position der Freigabe eines Samenkorns, wobei die Haltemittel vorübergehend verlagert werden, um von dem Rad (23) entfernt zu werden.

13. Regelvorrichtung (18a, 18b, 22) für eine Sämaschine nach Anspruch 12, **dadurch gekennzeichnet, dass** die beweglichen Haltemittel wenigstens eine Bürste (27) umfassen, die eine Anordnung von Borsten umfasst, von denen sich wenigstens der freie Teil im Wesentlichen tangential zu dem Rad erstreckt.

14. Sämaschine, welche mehrere Säaggregate (12) umfasst,
wobei jedes Säaggregat (12) Mittel zur Dosierung und zum Transport umfasst, welche den Durchsatz der Samenkörner am Ausgang eines Trichters (13) steuern und die Samenkörner in eine Transferleitung (5) befördern, um sie Mitteln zum Aussäen der Samenkörner zuzuführen,
wobei jedes Säaggregat (12) weiterhin eine Regelvorrichtung (18a, 18b, 22) umfasst, die zwischen den Mitteln zur Dosierung und zum Transport und den Mitteln zum Aussäen, in der Nähe dieser Letzteren, angebracht ist,
wobei die Regelvorrichtung (18a, 18b, 22) einen Vorratsbereich (22a) umfasst, dem über einen Zuführungseingang, der mit den Mitteln zur Dosierung und zum Transport über einen stromaufwärtige Teil (24a) der Transferleitung verbunden ist, Samenkörner (100) zugeführt werden,
wobei die Regelvorrichtung einen Eingang, der mit den Mitteln zur Dosierung verbunden ist, und einen Ausgang, der mit dem Säaggregat verbunden ist, umfasst,
und dadurch, dass die Regelvorrichtung ein Rad (23) umfasst, das geeignet ist, Samenkörner im Vorratsbereich (22a) mittels wenigstens einer Reihe von Zähnen zu entnehmen, wobei jeder Zahn dafür ausgelegt ist, eine Entnahme eines einzigen Samenkorns aus dem Vorratsbereich sicherzustellen, und aufweist:
- einen Aufnahmeraum (35), der geeignet ist, ein Samenkorn aufzunehmen;
- einen Abschnitt zur Führung eines Samenkorns, der eine Rutsche bildet und eine Auskehlung (36) zur Führung eines Samenkorns aufweist, wobei die Auskehlung in den Zahn eingearbeitet ist und der Boden der Auskehlung sich unter der Höhe des Ausgangsbereichs des Aufnahmeraumes (35) des folgenden Zahns befindet,
derart, dass ein aus dem Vorratsbereich entnommenes Samenkorn zunächst im Aufnahmeraum (35) eines Zahns gehalten wird und anschließend nach und nach in die Auskehlung (36) des vorangehenden Zahns geführt wird.

## Claims

1. Regulating device (18a, 18b, 22) for a sowing machine intended for supplying seed to a sowing element (12) of a sowing machine and intended for being connected downstream of means for the metering and conveying of the seed,
wherein said regulating device (18a, 18b, 22) comprises a reserve region (22a), supplied with seeds (100) via a supply inlet connected to said metering and conveying means,
wherein said device comprising a wheel (23) capable of taking seeds (100) from said reserve region (22a), by means of at least one row of teeth, each tooth being configured to cause the removal of a single seed from said reserve region, and having:
- a housing (35), capable of receiving a seed ;
- a portion for guiding a seed, forming a slide and having a groove (36) for guiding a seed, wherein said groove is hollowed out in the tooth and the bottom of said groove is below the level of the outlet region of said housing (35) of the following tooth,
such that a seed taken from said reserve region is first held in the housing (35) of a tooth and is then progressively guided into said groove (36) of the preceding tooth.

2. Regulating device (18a, 18b, 22) for a sowing machine according to claim 1, **characterised in that** said housing (35) substantially defines, in the plane of the wheel, a semicircle with a radius Ri of between 1 and 10 mm and **in that** the length L of said slide is at least three times said radius Ri.

3. Regulating device (18a, 18b, 22) for a sowing machine according to claim 1, **characterised in that** said groove (36) comprises a first transition portion (361), adjacent to the housing (35) of the following tooth, forming a ramp directed towards a second groove portion (362), called a channel, causing the guiding of the seed towards the tip of the tooth.

4. Regulating device (18a, 18b, 22) for a sowing machine according to claim 3, **characterised in that** said channel (362) extends in a substantially rectilinear manner.

5. Regulating device (18a, 18b, 22) for a sowing machine according to claims 1 and 2, **characterised in that** the depth of said groove (36) is substantially half the radius Ri.

6. Regulating device (18a, 18b, 22) for a sowing machine according to claim 3, **characterised in that** said groove comprises a third portion (363), known as the release portion, at the tip of the tooth, in which the upper edges of the second portion (362) come closer to one another.

7. Regulating device (18a, 18b, 22) for a sowing machine according to claim 1, **characterised in that** said wheel (23) comprises at least two rows of teeth (31, 32) separated by a central space (33).

8. Regulating device (18a, 18b, 22) for a sowing machine according to claim 7, **characterised in that** the teeth of a first row (31) are arranged in a staggered manner in relation to the teeth of a second row (32).

9. Regulating device (18a, 18b, 22) for a sowing machine according to any one of claims 1 to 8, **characterised in that** each of said teeth has at least one side wall (37, 38), at least on a portion of said housing (35).

10. Regulating device (18a, 18b, 22) for a sowing machine according to any one of claims 1 to 9, **characterised in that** said wheel (23) is rotatably driven by a motor (39) located at least partly inside said wheel (23).

11. Regulating device (18a, 18b, 22) for a sowing machine according to any one of claims 1 to 10, **characterised in that** said wheel (23) is selected from a plurality of wheels each adapted to a type, size and/or dose of seed to be conveyed.

12. Regulating device (18a, 18b, 22) for a sowing machine according to any one of claims 1 to 11, **characterised in that** it comprises mobile means for retaining the seeds inside said housings (35) of said teeth, delaying the release of each seed, being able to assume two positions:
- a default seed retaining position; and
- a seed release position, wherein said retaining means are temporarily displaced to be moved away from said wheel (23).

13. Regulating device (18a, 18b, 22) for a sowing machine according to claim 12, **characterised in that** said movable retaining means comprise at least one brush (27) comprising an assembly of bristles, of which at least the free part extends substantially tangentially to the wheel.

14. Sowing machine comprising a plurality of sowing elements (12),
wherein each sowing element (12) comprises metering and conveying means, controlling the flow rate of seeds at the outlet of a hopper (13) and delivering said seeds into a transfer conduit (5) to feed seeding means for said seeds,
wherein each sowing element (12) also comprises a regulating device (18a, 18b, 22) mounted between said metering and conveying means and said seeding means, in the vicinity of the latter,
wherein said regulating device (18a, 18b, 22) comprises a reserve region (22a), supplied with seeds (100) via a supply inlet connected to said metering and conveying means by an upstream part (24a) of said transfer conduit,
wherein said regulating device comprising an inlet connected to said metering means and an outlet connected to said sowing element,
and in that said regulating device comprises a wheel (23) capable of taking seeds from said reserve region (22a), by means of at least one row of teeth, wherein each tooth is configured to take a single seed from said reserve region, and has:
- a housing (35), capable of receiving a seed ;
- a portion for guiding a seed, forming a slide and having a groove (36) for guiding a seed, wherein said groove is hollowed out in the tooth and the bottom of said groove is below the level of the outlet region of said housing (35) of the following tooth,
such that a seed taken from said reserve region is first held in the housing (35) of a tooth and is then progressively guided into said groove (36) of the preceding tooth.
